# EUROPEAN PATENT APPLICATION

(11) **EP 1 655 908 A1**
(43) Date of publication of application: **10.05.2006**
(21) Application number: 05024124.9
(22) Date of filing: 04.11.2005
(51) Int. Cl.: H04L 12/56

(54) **Communication method and apparatus using heterogeneous neighbor base station information in a broadband wireless access communication system**

(30) Priority: 04.11.2004 KR 2004089495
(71) Applicant: Samsung Electronics Co., Ltd., Suwon-si, Gyeonggi-Do (KR)
(72) Inventor: Lee, Sung-Jin, Yeongtong-gu Suwon-si Gyeonggi-do (KR); Koo, Chang-Hoi, Yeongtong-gu Suwon-si Gyeonggi-do (KR); Son, Jung-Je, Yeongtong-gu Suwon-si Gyeonggi-do (KR); Lim, Hyoung-Kyu, Yeongtong-gu Suwon-si Gyeonggi-do (KR); Kang, Hyun-Jeong, Yeongtong-gu Suwon-si Gyeonggi-do (KR); Son, Yeong-Moon, Yeongtong-gu Suwon-si Gyeonggi-do (KR)
(74) Representative: Grünecker, Kinkeldey, Stockmair & Schwanhäusser Anwaltssozietät

(57) **Abstract**

A broadband wireless access communication system including a serving BS that periodically broadcasts an MOB_NBR-ADV message to an MS, and different kinds of heterogeneous networks. In order to communicate using the neighbor Base Station (BS) information, the serving BS gathers information about neighbor BSs and determines if heterogeneous communication systems exist using the gathered information. If the heterogeneous communication systems exist, the serving BS includes the information about the heterogeneous communication systems in the MOB_NBR-ADV message and broadcasts the MOB_NBR-ADV message to an MSS. If the MOB_NBR-ADV message is received from the serving BS, the MSS identifies if the heterogeneous communication systems exist using the MOB_NBR-ADV message.

## Description

### PRIORITY

This application claims priority to an application entitled "Communication Method and Apparatus Using Heterogeneous Neighbor Base Stations Information in Broadband Wireless Access Communication System" filed in the Korean Industrial Property Office on November 4, 2004 and assigned Serial No. 2004-89495, the contents of which are hereby incorporated by reference.

### BACKGROUND OF THE INVENTION

### 1. Field of the Invention

The present invention relates generally to a broadband wireless access communication system, and more particularly to a method and an apparatus for configuring a neighbor base station information message, which is periodically broadcast by a serving base station, and communicating using the message in a broadband wireless access communication system including the serving base station, which periodically broadcasts neighbor base station information to a mobile subscriber station.

### 2. Description of the Related Art

In a next generation communication system, that is, a 4^{th} generation (4G) communication system, much research has been made to provide users with services having various qualities of service (QoS) and supporting a transmission speed of about 100 Mbps. Particularly, in the current 4G communication system, research is being vigorously pursued to support high-speed services to broadband wireless access (BWA) communication systems such as wireless local area network (WLAN) communication systems and wireless metropolitan area network (WMAN) communication systems by ensuring both mobility and various QoSs.

A typical communication system for this purpose is an IEEE (Institute of Electrical and Electronics Engineers) 802.16a communication system or an IEEE 802.16e communication system. The IEEE 802.16a and IEEE 802.16e communication systems apply an orthogonal frequency division multiplexing (OFDM)/orthogonal frequency division multiple access (OFDMA) scheme in order to support a broadband transmission network to a physical channel of the WMAN system. More specifically, the IEEE 802.16a communication system currently considers only a fixed state of a subscriber station (SS), i.e., a state in which mobility of the subscriber station is not taken into account at all, and only a single cell structure. In contrast with this, the IEEE 802.16e communication system considers mobility of the subscriber station of the IEEE 802.16a communication system. Hereinafter, the subscriber station having mobility will be referred to as an 'MSS (mobile subscriber station)'.

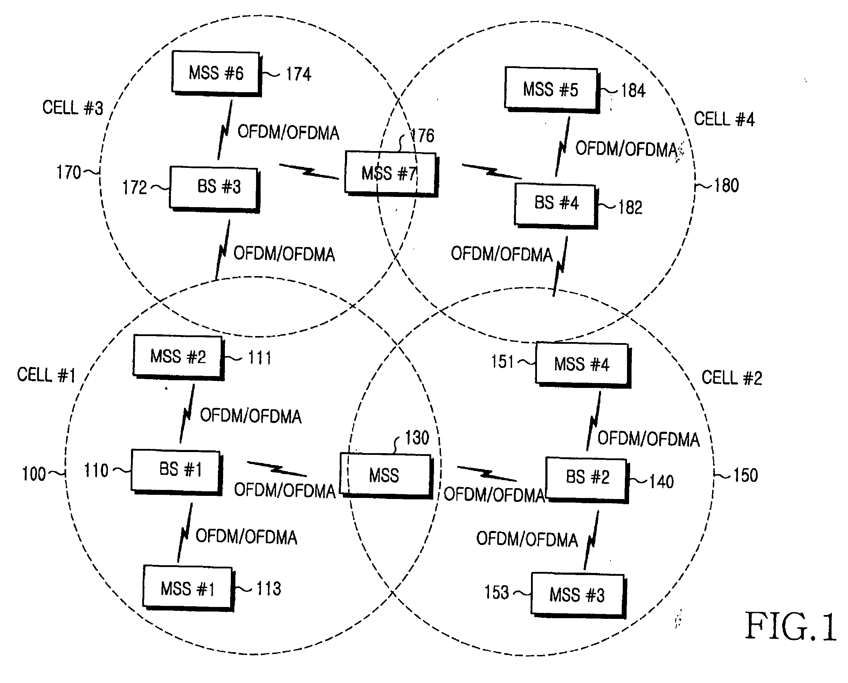

FIG. 1 schematically illustrates a conventional IEEE 802.16e communication system. Referring to FIG. 1, the IEEE 802.16e communication system has a multiple cell structure, for example, cells #1 to #4 100, 150, 170, 180. The IEEE 802.16e communication system also includes base stations (BSs) #1 to #4 110, 140, 172, 182 controlling the cells #1 to #4 100, 150, 170, 180, respectively, and a plurality of MSSs 111, 113, 130, 151, 153, 174, 176, and 184. Signal transmission/reception between the BSs 110, 140, 172, 182 and the MSSs 111, 113, 130, 151, 153, 174, 176, and 184 is implemented using the OFDM/OFDMA scheme.

In addition, from among the MSSs 111, 113, 130, 151, 153, 174, 176, and 184, the MSS 130 is located in a boundary area between the cell #1 100 and the cell #2 150, that is, in a handoff area. Thus, it is possible to support mobility of the MSS 130 only if handoff of the MSS 130 is supported.

FIG. 1 illustrates a case where the MSS 130, which has been located in the cell #1 100 and has communicated with the BS #1 110 through connection setup with the BS #1 110, moves to the cell #2 150 and must conduct handoff in order to newly communicate with the BS #2 140. At this time, connection setup contents for a physical layer and a media access control (MAC) layer, which have been set up during the communication with the BS #1 110, are not available for the communication with the BS #2 140. Therefore, when the MSS 130 moves from the cell #1 100 to the cell #2 150, it must conduct a re-entry procedure for new connection setup with the BS #2 140 of the cell #2 150 just as it has carried out an initial connection setup procedure with the BS #1 110.

In addition, in the IEEE 802.16e communication system, any MSS receives a plurality of pilot signals transmitted from a plurality of BSs. At this time, the MSS measures carrier to interference and noise ratios (CINR) of the received pilot signals. The MSS selects a BS, which has transmitted a pilot signal having the strongest CINR of the CINRs measured for the plurality of pilot signals, as a serving BS, i.e., a BS to which the MSS currently belongs. That is, the MSS recognizes a BS transmitting the best receivable pilot signal for the MSS, from among the plurality of BSs transmitting the pilot signals, as a BS to which the MSS currently belongs.

Ultimately, the BS, to which the MSS currently belongs, becomes the serving BS and, thereafter, the MSS, having selected the serving BS, receives downlink and uplink frames transmitted from the serving BS to perform data transmission/reception.

As described above, as the MSS shifts from a cell in which the MSS is currently located to another cell (target cell), the MSS becomes connected to a BS controlling the target cell so as to communicate with the BS controlling the target cell. Accordingly, based on the location shift of the MSS, a BS to be connected to the MSS is also changed. In this case, because connection setup information used in BSs are different from each other, connection setup for a corresponding BS must vary each time the BS is changed.

Therefore, each time the MSS changes its connection BS, it conducts a new connection setup procedure to attempt a new connection to the changed BS. However, if the MSS sets up the new connection when it is serviced from the BS during its location shift, for example, when it shifts its location and changes its connection BS during data transmission/reception to/from any one BS, there is a problem in that a data service in transmission/reception is interrupted and must be started afresh.

In the present broadband wireless access communication system, in order to facilitate connection setup for a new BS according to location shift of an MSS, a BS currently connected to the MSS provides information about neighbor BSs to which the MSS is likely to move and be newly connected to the MSS through a message advertising neighbor BS information.

Therefore, for movement and handoff to a neighbor cell, the MSS must be aware of neighbor cells information, i.e., neighbor BS information. Accordingly, the MSS gathers the neighbor BS information by receiving a message periodically broadcast from a serving BS, which currently provides services to the MSS.

In general, the message advertising neighbor BS information is called a 'Mobile_Neighbor-Advertisement message' (hereinafter referred to as 'MOB_NBR-ADV message').

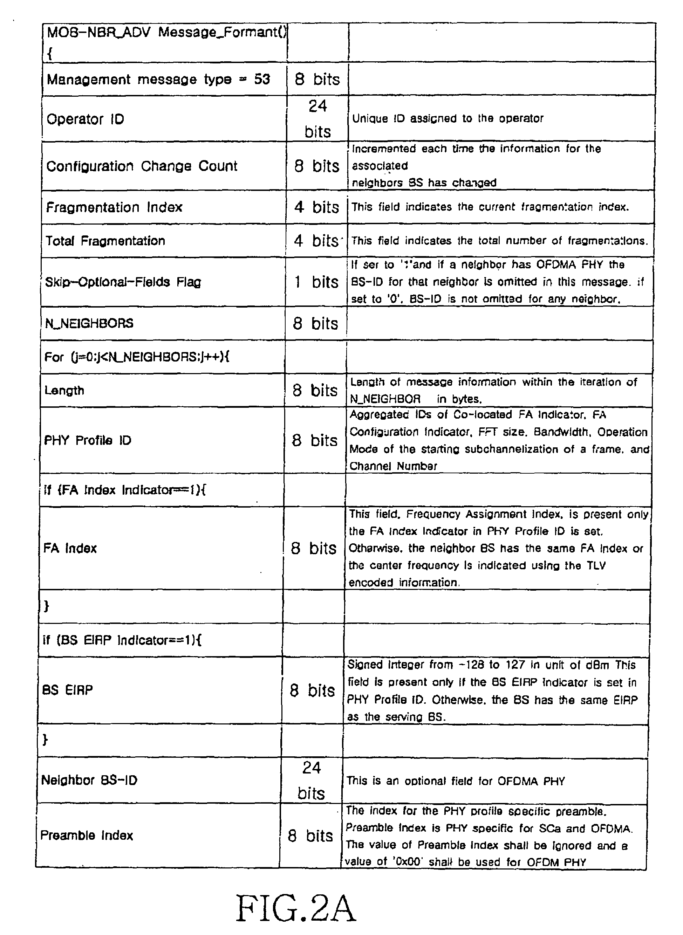

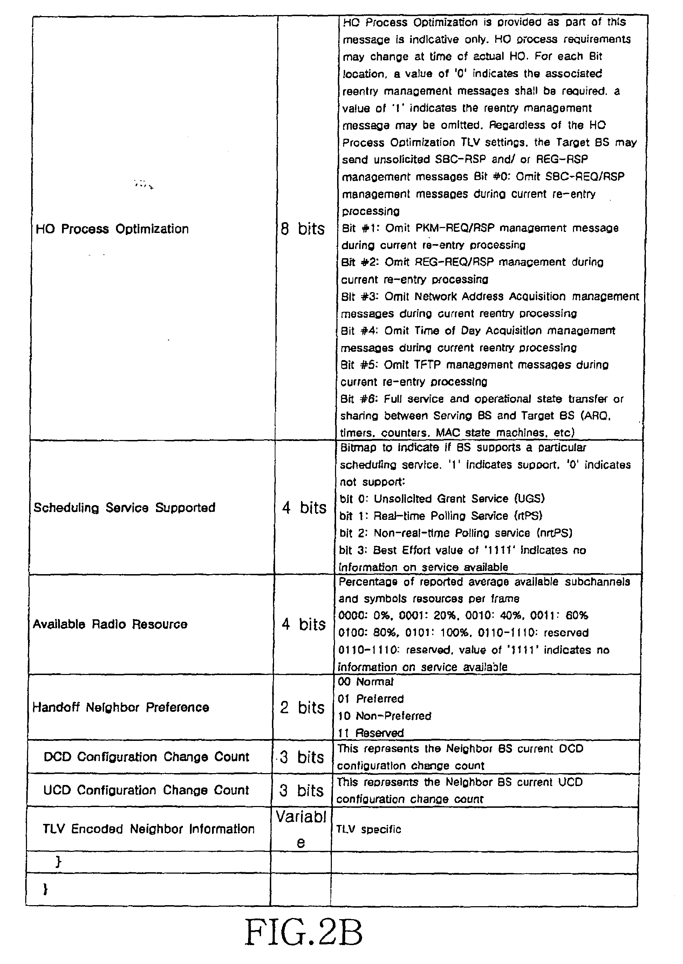

FIGs. 2A and 2B illustrates a format of a common MOB_NBR-ADV message. As illustrated in FIGs. 2A and 2B, the MOB_NBR-ADV message includes a plurality of information elements (IEs), as follows:
- Management Message Type: represents the type of a transmitted message,
- Configuration Change Count: each time message configuration changes, increases by 1 to indicate whether or not a corresponding message has changed,
- Fragmentation Index: represents the number of times that a message is transmitted when the MOB_NBR-ADV message is fragmented and the fragmentary messages are separately transmitted,
- Total Fragmentation: represents the total number of fragmentary messages,
- Skip-Optional-Fields Flag: indicates a BS-ID when the BS-ID is omitted in a corresponding message,
- N_NEIGHBORS: represents how many neighbor BSs information are included in a current message, that is, represents the number of neighbor BSs,
- Length: represents the length of one BSs information field expressed in a message,
- PHY Profile ID: indicates an information ID of a radio channel used in a corresponding BS,
- FA Index: indicates an inherent ID representing a frequency allocated to a corresponding BS,
- BS EIRP (Effective Isotropic Radiated Power): represents transmission power intensity of a corresponding neighbor BS,
- Neighbor BS-ID: indicates IDs of neighbor BSs,
- Preamble Index: indicates an ID of a preamble to be used in a corresponding sector of a corresponding BS,
- HO Process Optimization: dividedly indicates information about indispensable procedures and information about omissible procedures during handoffto a corresponding BS,
- Scheduling Service Supported: indicates QoS classes supportable by a corresponding BS, from among various QoS classes predefined between BSs,
- Available Radio Resource: indicates the degree of availability for radio channel resources of a corresponding BS,
- Handoff Neighbor Preference: indicates the degree of handoff preference for a corresponding neighbor BS such that a BS causes an MS to handoff to the corresponding neighbor BS,
- DCD Configuration Change Count: indicates a serial number of down link channel descript (hereinafter referred to as 'DCD') information of a corresponding neighbor BS,
- UCD Configuration Change Count: indicates a serial number of uplink channel descript (hereinafter referred to as 'UCD') information of a corresponding neighbor BS, and
- TLV Encoded Neighbor Information: represents all information related to a neighbor BS other than the aforementioned information.

As described above, the serving BS gathers information about BSs neighboring a corresponding cell to configure the MOB_NBR-ADV message, and periodically broadcasts it to the MSS. The MS, having received the MOB_NBR-ADV message periodically broadcast from the serving BS, can acquire scanning information for measuring signal intensities of the neighbor BSs through information included in each fields of the MOB_NBR-ADV message. That is, the MS can identify the neighbor BSs using the Neighbor BS-ID information, and becomes aware of physical frequency band search information, which is necessary for scanning the neighbor BSs, through the Physical Frequency field.

Accordingly, the serving BS periodically broadcasts the MOB_NBR-ADV message to the MSS, which is located in a corresponding cell under the control of the serving BS, to provide information about the neighbor BSs to which the MSS is not currently connected, but is likely to be connected when it shifts its location. This enables the MSS to conduct rapid connection setup and smooth handoff when it moves to another cell.

However, such a conventional MOB_NBR-ADV message includes and transmits only information about homogeneous neighbor BSs included in the same communication system. Consequently, when the MSS belongs to a WLAN system or a 3^{rd} generation (3G) mobile communication system, in addition to the broadband wireless access communication system, no information about other heterogeneous networks, i.e., the WLAN system and the 3G mobile communication system is available for the MSS, except that the MSS is provided with information about the broadband wireless access communication system.

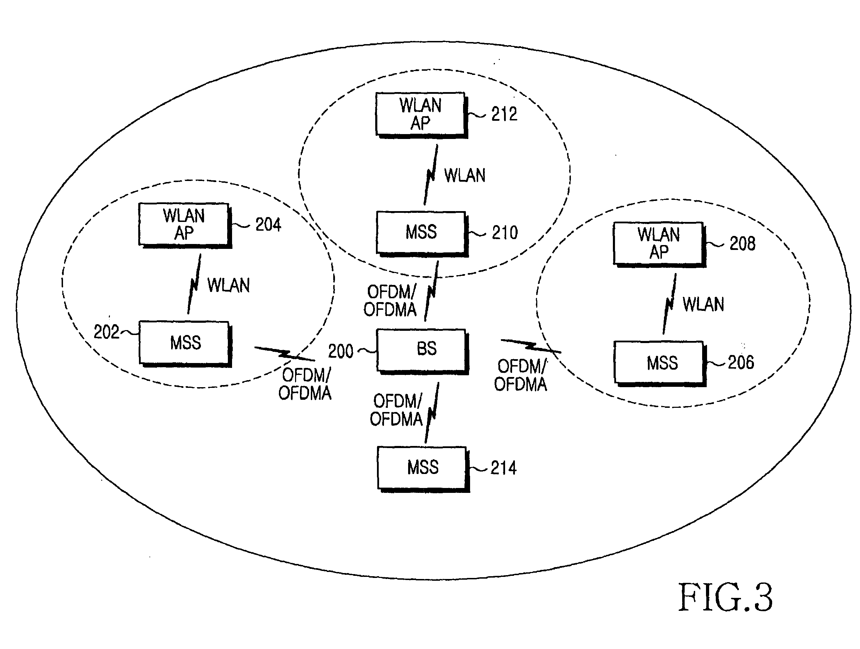

FIG. 3 schematically illustrates a network structure in which a common broadband wireless access communication system coexists with different kinds of networks, i.e., heterogeneous networks. However, prior to explaining FIG. 3, it is noted that three WLAN access points (AP) 204, 208, and 212 exist in a broadband wireless access network in FIG. 3, different than illustrated in FIG. 1, and MSSs 202, 206, and 210 within the broadband wireless access network exists in a cell of a broadband wireless access network BS 200 and simultaneously in WLAN areas.

Referring to FIG. 3, if the MSS 206 has a dual radio device, i.e., it is an MSS supporting a dual mode, it searches the WLAN AP 208 to be connected thereto without any problem while communicating with the broadband wireless access network BS 200. However, if an MSS supporting a dual mode is located in a cell area in which a WLAN system does not exist, it cannot conduct any connection setup even if it continues to search a WLAN AP because there is no WLAN AP in the cell area. At this time, the MSS is provided with neighbor BSs information through an MOB_NBR-ADV message, but is provided with no information about whether or not a heterogeneous BS or the WLAN AP exists because the MOB_NBR-ADV message includes only neighbor BSs information for the same broadband wireless access service.

Also, even though the MSS has searched the heterogeneous BS by separately using a WLAN device or a 3G mobile communication device, it cannot know if the corresponding heterogeneous BS is capable of handoff or coupling to the broadband wireless access BS in communication. Therefore, the MSS can only determine if the heterogeneous BS is capable of coupling to the current broadband wireless access BS only after it first attempts a connection to the heterogeneous BS to undergo success or failure in the connection to the heterogeneous BS.

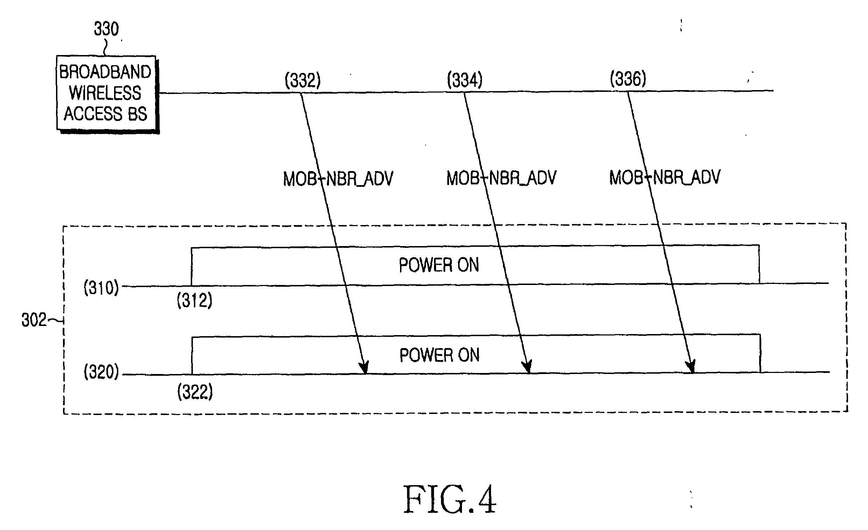

FIG. 4 illustrates a communication process of an MSS in a communication system including heterogeneous networks. More specifically, in FIG. 4, the MSS communicates with a broadband wireless access BS using a broadband wireless access communication device provided therein. In this case, it is assumed that the MSS 302 simultaneously has different kinds of radio devices (heterogeneous radio devices) such as the broadband wireless access communication device 320 and a WLAN device 310. In addition, FIG. 4 considers a communication environment in which the MSS 302 preferentially communicates with the broadband wireless access BS 330 by using the broadband wireless access communication device(320) provided therein.

Referring to FIG. 4, the MSS 302 periodically receives an MOB_NBR-ADV message from the broadband wireless access BS 330 as designated by reference numerals '332', '334', and '336'. The MSS turns on power of the WLAN device 310 to search a WLAN AP at a point of time designated by reference numeral '312' in order to determine if it is possible to access to the WLAN in neighbor areas.

As illustrated in FIG. 4, besides the broadband wireless access BS, there is no WLAN AP. Nevertheless, because the MSS does not know such information, it continually searches the WLAN AP starting from the point of time designated by reference numeral '312'. However, the MSS cannot find the WLAN AP because of its non-existence, which results in power wastage.

In such a case, the MSS may use a method in which the MSS stops searching the WLAN AP based on its own judgment and then reopens the searching after the passage of some time. However, even in this case, the MSS does not know the non-existence of the WLAN AP and continues to search the WLAN AP, so power is still consumed although the power consumption is somewhat reduced, because the MSS is connected to the broadband wireless access BS 330 providing a communication service thereto, but the broadband wireless access BS 330 provides only homogeneous BS information as in the aforementioned prior art and does not provide heterogeneous access technology information as shown in FIG. 4. Accordingly, in the circumstances of FIG. 4, the MSS has to undergo trial and error procedures in person without the aid of the broadband wireless access BS.

Also, in the circumstances illustrated FIG. 4, the MSS 302 may search the WLAN AP in neighbor areas to determine any WLAN AP and attempt a connection to the WLAN AP. However, even in this case, the MSS does not know if the corresponding AP is connected to the broadband wireless access BS 330 in communication with the MSS such that roaming or handoff is supported, i.e., if the corresponding AP is a network capable of handoff or coupling to the broadband wireless access BS to which the MSS is currently connected. Accordingly, the MSS must carry out unnecessary procedures for checking such information.

That is, the MSS can acquire information indicating if the corresponding AP can be coupled to the broadband wireless access BS in communication only after first attempting a connection to and registration with the WLAN AP, i.e., attempting a connection to the WLAN AP to undergo success or failure in the connection. Therefore, the MSS, which must reduce power consumption as much as possible due to very limitative power amount, is subjected to a fatal waste of power resources.

Consequently, the dual-mode MSS simultaneously including at least two wireless access devices desires to acquire many kinds of wireless access BSs information corresponding to the wireless access devices included therein, so a method capable of providing heterogeneous neighbor BSs information.

### SUMMARY OF THE INVENTION

Accordingly, the present invention has been designed to solve at least the above-mentioned problems occurring in the prior art.

An object of the present invention is to provide a method and an apparatus for configuring an MOB_NBR-ADV message in a broadband wireless access communication system including a serving BS that periodically broadcasts neighbor BS information to an MSS, and a communication method and communication apparatus using the MOB_NBR-ADV message.

A further object of the present invention is to provide a method and an apparatus for preventing an MSS from wasting power when there is actually no area including heterogeneous system capable of coupling in a communication system including heterogeneous BSs.

A further object of the present invention is to provide a method and an apparatus for reducing power consumption of a dual-mode MSS by newly defining an MOB_NBR-ADV message configured by a serving BS to reduce scanning operations of the MSS.

A further object of the present invention is to provide a method and an apparatus for adding new information to an MOB_NBR-ADV message in a broadband wireless access communication system.

A further object of the present invention, with respect to transmitting a newly proposed MOB_NBR-ADV message in a broadband wireless access communication system, is to provide a method and an apparatus for identifying heterogeneous neighbor BSs in a current cell area of an MSS.

A further object of the present invention is to provide a method and an apparatus for previously reporting if an MSS can handoff to a corresponding heterogeneous network when the corresponding heterogeneous network exists in a current cell area of a BS.

A further object of the present invention is to provide a method and an apparatus for configuring an MOB_NBR-ADV message in consideration of whether or not heterogeneous neighbor BSs information is included in the message.

A further object of the present invention, with respect to transmitting a newly proposed MOB_NBR-ADV message in a broadband wireless access communication system, is to provide a method and an apparatus for determining if heterogeneous networks exist in a current cell area or a neighbor area and if roaming or handoff of an MSS can be supported.

In order to accomplish these and other objects, in accordance with an aspect of the present invention, there is provided a communication method using a neighbor Base Station (BS) information in a broadband wireless access communication system. The method includes the steps of: gathering information in a serving BS about neighbor BSs; determining if heterogeneous communication systems exist from the gathered information; if the heterogeneous communication systems exist, including, in the serving BS, the information about the heterogeneous communication systems in a MOB_NBR-ADV (Mobile_Neighbor-Advertisement) message; broadcasting the MOB_NBR-ADV message to a Mobile Subscriber Station (MSS); and, if the MOB_NBR-ADV message is received in the MSS from the serving BS, identifying if the heterogeneous communication systems exist from in the MOB_NBR-ADV message.

In accordance with another aspect of the present invention, there is provided a method for configuring a Mobile_Neighbor-Advertisement (MOB_NBR-ADV) message that is periodically broadcast to a Mobile Subscriber Station (MSS), in a serving Base Station (BS) of a broadband wireless access communication system. The method includes the steps of: gathering information about neighbor BSs; determining if heterogeneous BSs exist from among the neighbor BS information; and allocating identification information that represents if the heterogeneous BSs exist to a prescribed field, according to a result of the determining step.

In accordance with another aspect of the present invention, there is provided an apparatus for communicating through Mobile_Neighbor-Advertisement (MOB_NBR-ADV) message transmission/reception in a broadband wireless access communication system including heterogeneous communication systems. The apparatus includes: a serving Base Station (BS) for gathering information about neighbor BSs, determining if heterogeneous BSs exist from among neighbor BSs, allocating identification information that indicates if the heterogeneous BSs exist to a prescribed field according to a result of the determining step to configure the MOB_NBR-ADV message, and broadcasting the MOB_NBR-ADV message, to which the prescribed field is added; and a Mobile Subscriber Station (MSS) for checking an information field for the heterogeneous BSs included in the MOB_NBR-ADV message, if receiving the MOB_NBR-ADV message from the serving BS, determining if a heterogeneous BS, to which the MSS can access, exists in a cell of the BS, according to a value set in the information field for the heterogeneous BSs, and performing one of power control thereof and an access to the heterogeneous BS, based on whether the heterogeneous BS that the MSS can access exists in the cell of the BS.

In accordance with another aspect of the present invention, there is provided a method for communicating between an MSS (Mobile Subscriber Station) and a heterogeneous network in a communication system in which a serving BS (Base Station) periodically broadcasting an Mobile_Neighbor-Advertisement (MOB_NBR-ADV) message coexists with different kinds of heterogeneous networks. The method includes the steps of: if the MSS receives the MOB_NBR-ADV message from the serving BS, checking an information field for heterogeneous BSs included in the MOB_NBR-ADV message; and performing operations corresponding to if a heterogeneous BS, to which the MSS can access, exists in a cell of the serving BS, according to a value set in the information field for the heterogeneous BSs.

### BRIEF DESCRIPTION OF THE DRAWINGS

The above and other objects, features, and advantages of the present invention will be more apparent from the following detailed description taken in conjunction with the accompanying drawings, in which:
FIG. 1 is a schematic view illustrating a conventional IEEE 802.16e communication system;
FIGs. 2A and 2B are views illustrating a format of a conventional MOB_NBR-ADV message;
FIG. 3 is a schematic view illustrating a network structure in which a common broadband wireless access communication system and heterogeneous networks coexist;
FIG. 4 is a view illustrating a conventional communication process of an MSS in a common communication system in which different kinds of heterogeneous networks coexist;
FIGs. 5A to 5C are views illustrating an MOB_NBR-ADV message newly proposed in the present invention;
FIG. 6 is a flowchart illustrating a process of setting up a heterogeneous neighbor BSs information field in an MOB_NBR-ADV message in accordance with a preferred embodiment of the present invention; and
FIG. 7 is a view illustrating a communication process of an MSS in a common communication system, in which heterogeneous networks coexist, according to the present invention.

### DETAILED DESCRIPTION OF THE PREFERRED EMBODIMENT

Hereinafter, preferred embodiments of the present invention will be described with reference to the accompanying drawings. It should be noted that the similar components are designated by similar reference numerals although they are illustrated in different drawings. Also, in the following description, a detailed description of known functions and configurations incorporated herein will be omitted when it may obscure the subject matter of the present invention.

The present invention proposes a new MOB_NBR-ADV message in a broadband wireless access communication system, and a method and an apparatus for performing communication between a BS (Base Station) and an MSS (Mobile Subscriber Station) by using the new MOB_NBR-ADV (Mobile_Neighbor-Advertisement) message.

Also, the present invention proposes a method and an apparatus for selectively configuring information about heterogeneous neighbor BSs to include it in an MOB_NBR-ADV message, and enabling an MSS to acquire the information about the heterogeneous neighbor BSs using the MOB_NBR-ADV message in a broadband wireless access communication system in which a serving BS configures neighbor BSs information to broadcast it to cell areas under the control thereof.

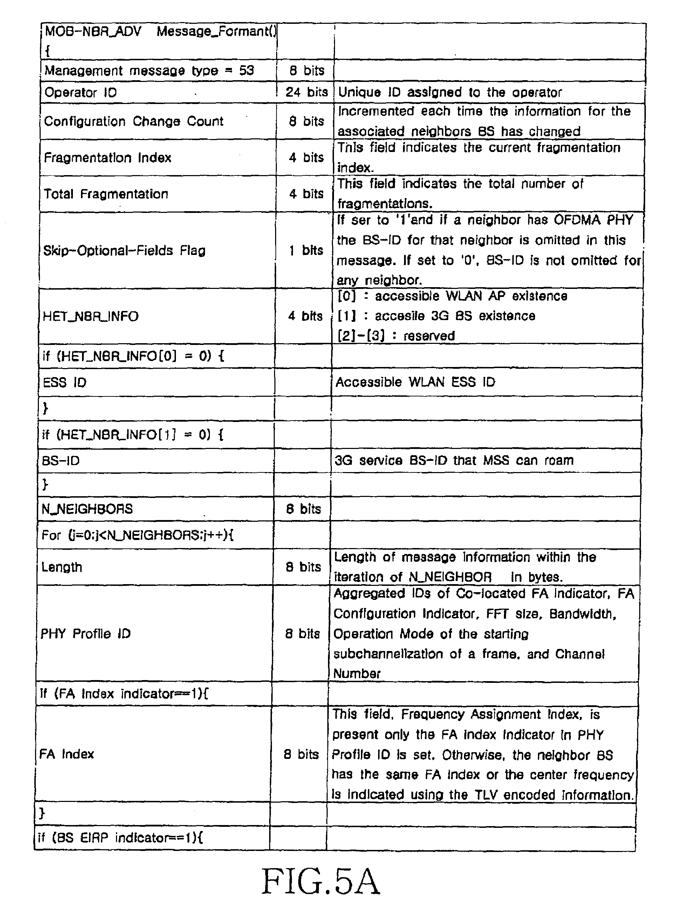

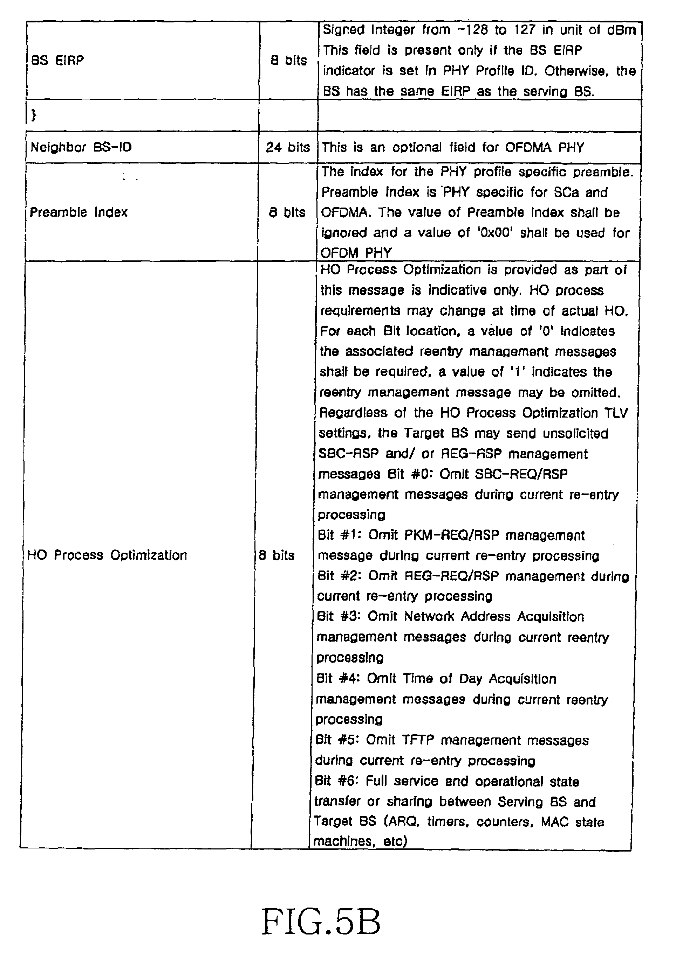

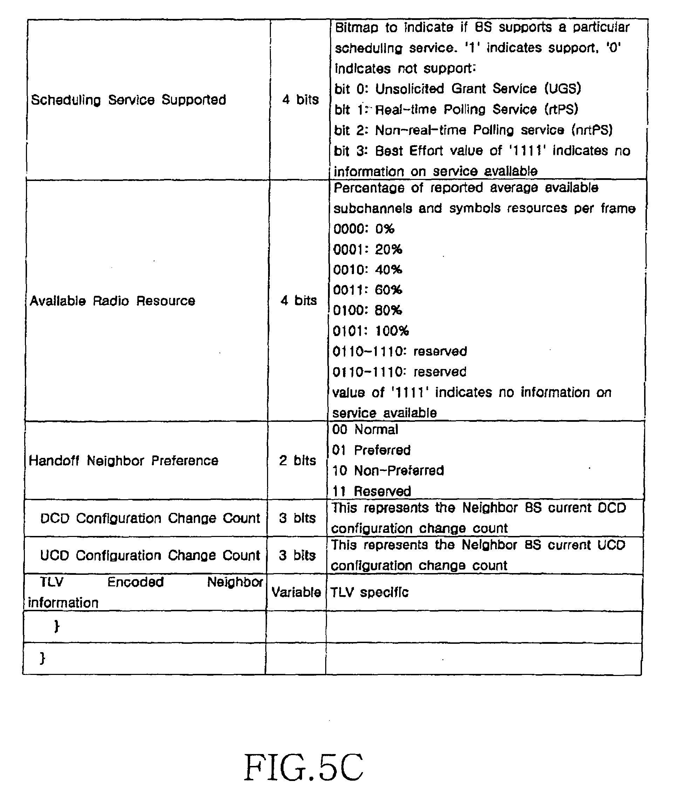

The present invention is not limited to the following description, and it should be appreciated that various other embodiments corresponding to the following embodiment may also be applied to the present invention. FIGs. 5A to 5C illustrate an MOB_NBR-ADV message proposed in a broadband wireless access communication system in accordance with a preferred embodiment of the present invention. However, prior to explaining FIGs. 5A to 5C, it is noted that the MOB_NBR-ADV message proposed in the present invention newly adds an HET_NBR_INFO (Heterogeneous Neighbor Information) field, which represents information about heterogeneous BSs within a corresponding cell, to the conventional message format shown in FIGs. 2A and 2B. Therefore, a description of the same part as those of the conventional message shown in FIGs. 2A and 2B will be omitted and a detailed description will be for only the HET_NBR_INFO in the following description.

Also, according to what the newly added HET_NBR_INFO field indicates, specific fields are included or not included in the MOB_NBR-ADV message configured by a corresponding serving BS, which will be described below.

Referring to FIGs. 5A to 5C, the HET_NBR_INFO field is configured of 4 bits. In the present invention, 2 bits of such 4 bits are used for representing whether or not information about heterogeneous networks is included in the MOB_NBR-ADV message, and remaining 2 bits are used as reserved bits available for future additional function extension. However, the present invention is not limited to this, and aforementioned 4 bits and 2 bits are defined only for the convenience of explanation. That is, it is obvious that the various number of bits may be applied to configuring the HET_NBR_INFO field.

The 4 bits used for the HET_NBR_INFO field are configured as follows:
Bit [0]: indicates if a WLAN AP is located among neighbor BSs, that is, if there is a WLAN AP, to which an MSS can be coupled, for example, it can roam or handoff in a corresponding cell, except a broadband wireless access communication system. If a value of bit [0] is '0' (HET_NBR_INFO [0] = 0), this means that a WLAN AP accessible by the MSS exists in a corresponding cell area. However, if a value of bit [0] is '1' (HET_NBR_INFO [0] = 1), this means that no WLAN AP exists in the corresponding cell area.
Bit [1]: indicates if a 3G mobile communication system exists among neighbor BSs, i.e., if there is a 3G mobile communication system (cellular network) to which an MSS can roam or handoff in a corresponding cell while communicating with a broadband wireless access communication system. If a value of bit [1] is '0' (HET_NBR_INFO [1] = 0), this means that a 3G mobile communication system capable of coupling to the broadband wireless access communication system exists in a corresponding cell area. However, if a value of bit [1] is '1' (HET_NBR_INFO [1] = 1), this means that no 3G mobile communication system exists in the corresponding cell area.
Bits [2] and [3]: are reserved bits available for future additional function extension.

The HET_NBR_INFO field proposed in the present invention, which indicates if heterogeneous networks exist in a cell area, may or may not be included in the MOB_NBR-ADV message as occasion demands.

Also, the heterogeneous network, which is exemplified by a WLAN or a 3G mobile communication system, for example, a cellular network in the present invention, may be one or more in number. Thus, the MOB_NBR-ADV message proposed in the present invention may include an ID for reporting information about a BS, to which the MSS can access, from among the aforementioned heterogeneous networks, i.e., a predetermined ID for authentication or encoding in a corresponding system.

In order to realize such a function, the MOB_NBR-ADV message of the present invention includes an ESS (Extended Service Set) ID field with respect to the WLAN system, and includes a BS-ID field with respect to the 3G mobile communication system, for example, the cellular network as illustrated in FIG. 5A.

More specifically, the MSS identifies a corresponding WLAN AP, to which it can access, from among a plurality of WLAN APs through the ESS ID field, and identifies a corresponding 3G mobile communication BS, from which it is provided with services, for example, to which it can roam, from among a plurality of 3G mobile communication BSs through the BS-ID field. The ESS ID or BS-ID field is used for security as well as authentication and encoding in the WLAN system and the cellular network, e.g., it is used for authentication between the MSS and the WLAN AP or the 3G mobile communication BS.

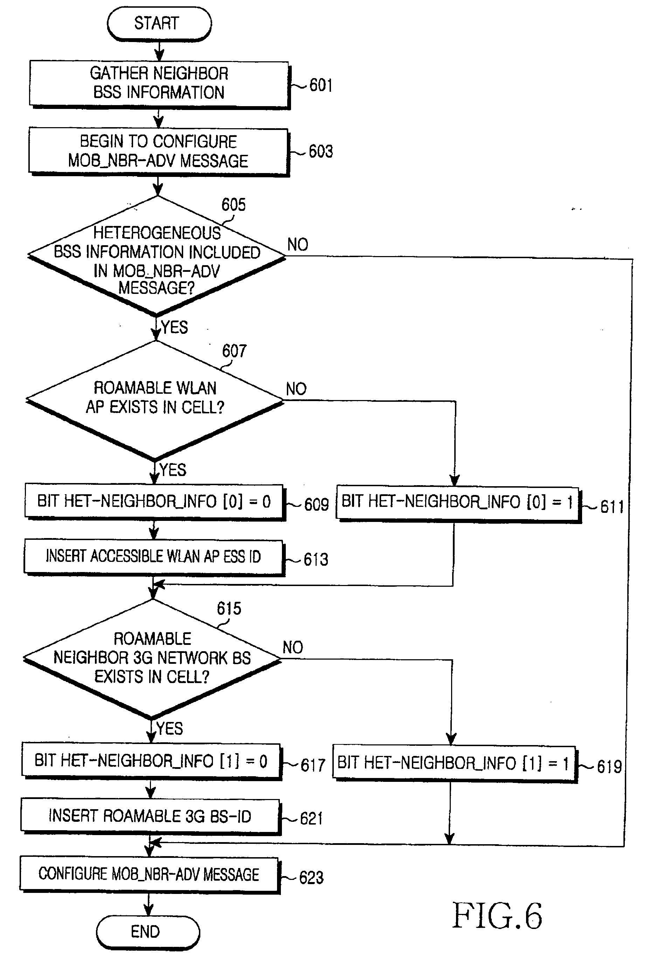

FIG. 6 is a flowchart illustrating a process in which a serving BS configures an MOB_NBR-ADV message in a broadband wireless access communication system. Referring to FIG. 6, in step 601, a serving BS gathers information about neighbor BSs adjoining the serving BS and then, in step 603, begins to configure an MOB_NBR-ADV message. The serving BS determines if the aforementioned heterogeneous BSs information field as proposed in the present invention is included in the MOB_NBR-ADV message. Accordingly, when the serving BS configures the MOB_NBR-ADV message, it may include the heterogeneous BSs information field in step 607 as described below or may not include the heterogeneous BSs information field in step 623 as described below while configuring only the remaining IEs of the MOB_NBR-ADV message.

More specifically, when the serving BS configures the MOB_NBR-ADV message, it first determines, in step 605, if the heterogeneous BSs information field is included in the MOB_NBR-ADV message. Thereupon, if the heterogeneous BSs information is not included in the MOB_NBR-ADV message, the serving BS proceeds to step 623 to configure the MOB_NBR-ADV message with only general neighbor BSs information, excluding the heterogeneous BSs information.

However, if the heterogeneous BSs information is included in the MOB_NBR-ADV message, the serving BS checks if a heterogeneous network, for example, a WLAN AP or a cellular network, to which an MSS can roam or handoff, exists in a cell under the control thereof. As an example, the serving B S dividedly performs a procedure in step 607 or 615 as described below. However, this in only one embodiment of the present invention, and the present invention is not limited to this. That is, the serving BS according to the present invention may implement steps 607 and 615 as one step by identifying and acquiring system information of the checked heterogeneous network through predetermined values, etc.

When the heterogeneous BSs information is included in the MOB_NBR-ADV message, in step 607, the serving BS checks if a heterogeneous network, for example, a WLAN AP, to which an MSS can roam or handoff, exists in a cell under the control thereof. If such a WLAN AP exists, the serving BS proceeds to step 609. In step 609, the serving BS sets bit HET_NBR_INFO [0] to '0', and in step 613, the serving BS inserts an ESS ID of the WLAN AP accessible by the MSS into the MOB_NBR-ADV message, and proceeds to step 615.

As a result of checking in step 607, if the WLAN AP accessible by the MSS does not exist, the serving BS proceeds to step 611 to set bit HET_NBR_INFO [0] to '1', and then proceeds to step 615.

When the heterogeneous BSs information is included in the MOB_NBR-ADV message, in step 607, the serving BS checks if a heterogeneous network, for example, a 3G mobile communication BS, to which an MSS can roam or handoff, exists in a cell under the control thereof in step 615. In step 615, if such a 3G mobile communication BS exists, in step 617, the serving BS sets bit HET_NBR_INFO [1] to '0'.

In step 621, the serving BS inserts a BS-ID of the 3G mobile communication BS capable of coupling thereto into the MOB_NBR-ADV message. If the 3G mobile communication BS capable of coupling to the serving BS does not exist in step 615, the serving BS proceeds to step 619 to set bit HET_NBR_INFO [1] to '1', and thereafter proceeds to step 623.

In step 623, the serving BS configures the remaining IEs of the MOB_NBR-ADV message to complete the configuration of the MOB_NBR-ADV message.

Hereinafter, a description will be given for a process in which, when an MSS receives an MOB_NBR-ADV message including an HET_NBR_INFO field proposed in the present invention, the MSS communicates using the MOB_NBR-ADV message.

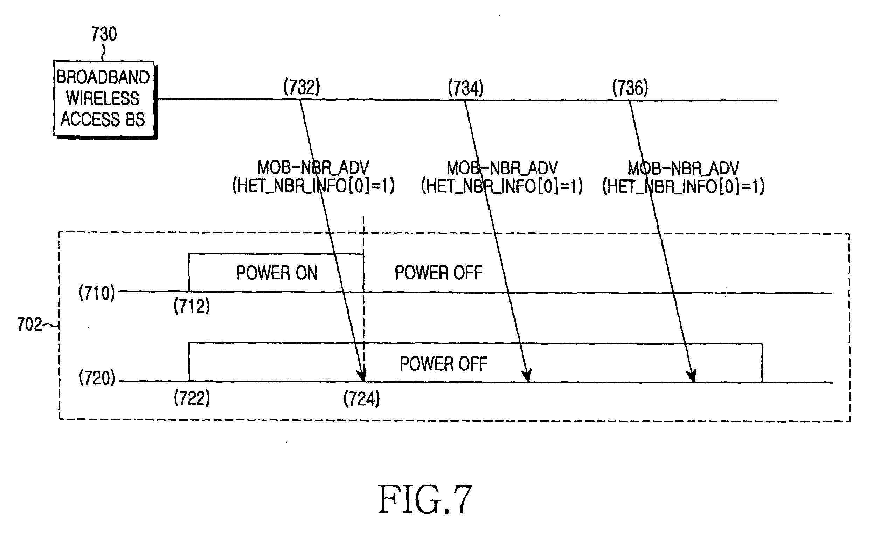

FIG. 7 illustrates a communication process of an MSS in a communication system, in which heterogeneous networks coexist, in accordance with a preferred embodiment of the present invention. In particular, FIG. 7 illustrates a process in which the MSS communicates with a broadband wireless access communication system by using a broadband wireless access device provided therein. Also, similar to FIG. 4, FIG. 7 assumes that the MSS 702 is a dual-mode MSS including different kinds of heterogeneous radio devices such as a WLAP access device 710 and a broadband wireless access device 720. Further, FIG. 7 considers a communication environment in which the MSS 702 is preferentially communicating with a broadband wireless access BS 730 by using the broadband wireless access device 720 provided therein.

Referring to FIG. 7, the MSS 702 is connected to the broadband wireless access BS 730, which periodically broadcasts an MOB_NBR-ADV message including HET_NBR_INFO 732, 734, and 736. As in FIG. 4, the MSS 702 also performs operations for searching the WLAN access device 710 at a point of time 712.

In the present invention, when the MSS 702 receives the MOB_NBR-ADV message from the broadband wireless access BS 730 through broadband wireless access communication, it is also provided with information about heterogeneous networks other than the broadband wireless access BS 730. For example, the MSS 702 according to the present invention receives contents set up in bit [0] of the HET_NBR_INFO field within the MOB_NBR-ADV message. Accordingly, the MSS 702 identifies if a heterogeneous network, for example, a WLAN AP, to which it can access, exists in the corresponding broadband wireless access BS 730 through the MOB_NBR-ADV message broadcasted by the broadband wireless access BS 730.

For example, if the MSS 702 receives the MOB_NBR-ADV message, in which bit [0] of the HET_NBR_INFO field is set to '1', at a point of time 724, it recognizes that a WLAN AP, to which it can access, does not exists in the broadband wireless access BS 730. Accordingly, the MSS 702 turns off power of the WLAN access device 710 at the corresponding point of time and does not search the existence of a neighbor WLAN AP any longer.

In contrast with this, if the MSS 702 receives the MOB_NBR-ADV message, in which bit [0] of the HET_NBR_INFO field is set to '0', at a point of time 724, it recognizes that a WLAN AP, to which it can access, exists in the broadband wireless access BS 730. Accordingly, the MSS 702 immediately performs a connection setup to the corresponding WLAN AP through an ESS-ID included in the MOB_NBR-ADV message.

In FIG. 7, a description has been given on the assumption that the heterogeneous network is the WLAN AP. However, the present invention is not limited to this, and may be applied to various systems including the 3G mobile communication system as in FIG. 6.

The broadband wireless access BS 730 provides information about whether or not a supportable WLAN AP exists in a cell under the control thereof to the MSS 702 by configuring the HET_NBR_INFO field in the MOB_NBR-ADV message as proposed in FIGs. 5A to 5C, such that the MSS 702 can save power consumption caused by performing unnecessary operations.

As described above, in a communication method and a communication apparatus using heterogeneous neighbor BSs information in a broadband wireless access communication system according to the present invention, there is an advantage in that a serving BS can broadcast information about heterogeneous networks to an MSS by configuring an MOB_NBR-ADV message in which a HET_NBR_INFO field is included. Accordingly, the MSS receives information about heterogeneous systems other than the broadband wireless access communication system, such that it can reduce power consumption due to performing unnecessary operations. Also, the MSS need not continually search an AP in an area having no WLAN or 3G device, to which it can be coupled, by virtue of the information about the heterogeneous systems, thereby preventing power wastage.

Even if the MSS using information provided in the present invention has a heterogeneous access device, it attempts an access to the heterogeneous network according to necessity only when the MOB_NBR-ADV message indicates that the heterogeneous network actually exists in a corresponding cell area, so power and radio channels can be saved.

Also, scanning operations of the MSS are reduced through the message format proposed in the present invention, which makes it possible to reduce power consumption of the MSS.

While the present invention has been shown and described with reference to certain preferred embodiments thereof, it will be understood by those skilled in the art that various changes in form and details may be made therein without departing from the spirit and scope of the present invention as defined by the appended claims.

## Claims

1. A communication method using a neighbor Base Station (BS) information in a broadband wireless access communication system, the method comprising the steps of:
gathering information in a serving BS about neighbor BSs;
determining if heterogeneous communication systems exist from the gathered information;
if the heterogeneous communication systems exist, including, in the serving BS, the information about the heterogeneous communication systems in a MOB_NBR-ADV (Mobile_Neighbor-Advertisement) message;
broadcasting the MOB_NBR-ADV message to a Mobile Subscriber Station (MSS); and
if the MOB_NBR-ADV message is received in the MSS from the serving BS, identifying if the heterogeneous communication systems exist from in the MOB_NBR-ADV message.

2. The method as claimed in claim 1, further comprising the step of accessing the heterogeneous communication systems, by the MSS, according to necessity, if the MSS identifies that the heterogeneous communication systems exist.

3. The method as claimed in claim 1, wherein the information about the heterogeneous communication systems is information indicating if the heterogeneous communication systems exist in a system to which the MSS has accessed, and is configured by a prescribed field in the MOB_NBR-ADV message.

4. The method as claimed in claim 3, wherein the prescribed field includes an HET_NBR_INFO (Heterogeneous neighbor Information) field to which predetermined bits are allocated, the predetermined bits representing, in the MOB_NBR-ADV message, if the heterogeneous communication systems exists.

5. The method as claimed in claim 3, wherein bits corresponding to a number of scanned heterogeneous communication systems are allocated to the prescribed field to indicate the information about the heterogeneous communication systems.

6. The method as claimed in claim 3, wherein the HET_NBR_INFO includes a bit value representing that the heterogeneous communication systems, to which the MSS can access, exist in a corresponding cell area, and a bit value representing that no accessible heterogeneous communication system exists in the corresponding cell area.

7. The method as claimed in claim 1, wherein the MOB_NBR-ADV message includes a field indicating if the respective heterogeneous communication systems exist and at least one field for identifying the corresponding heterogeneous communication systems.

8. A method for configuring a Mobile_Neighbor-Advertisement (MOB_NBR-ADV) message that is periodically broadcast to a Mobile Subscriber Station (MSS), in a serving Base Station (BS) of a broadband wireless access communication system, the method comprising the steps of:
gathering information about neighbor BSs;
determining if heterogeneous BSs exist from among the neighbor BS information; and
allocating identification information that represents if the heterogeneous BSs exist to a prescribed field, according to a result of the determining step.

9. The method as claimed in claim 8, wherein when the information about the heterogeneous BSs is not included in the MOB_NBR-ADV message, the MOB_NBR-ADV message is configured by including only information about homogeneous BSs.

10. The method as claimed in claim 8, wherein the prescribed field indicating if the heterogeneous BSs exist is allocated to the MOB_NBR-ADV message, and includes an HET_NBR_INFO (Heterogeneous neighbor Information) field including predetermined bits which represents whether or not the heterogeneous BSs exist.

11. The method as claimed in claim 10, wherein, of the predetermined bits, bits corresponding to a number of scanned heterogeneous BSs are allocated for indicating the information about the heterogeneous BSs.

12. The method as claimed in claim 8, wherein the MOB_NBR-ADV message includes prescribed fields for identifying heterogeneous BSs, to which a corresponding MSS can access, among the heterogeneous BSs.

13. The method as claimed in claim 8, wherein each of bits used in the prescribed field including the identification information for indicating if the heterogeneous BSs exist, identifies each different heterogeneous BS and represents if a heterogeneous BS information field corresponding to each heterogeneous BS is included in the MOB_NBR-ADV message.

14. The method as claimed in claim 8, wherein the identification information indicating if the heterogeneous BSs exist includes a bit value representing that the heterogeneous BSs, to which the MSS can access, exist in a corresponding cell area, and a bit value representing that no accessible heterogeneous BS exists in the corresponding cell area.

15. The method as claimed in claim 8, wherein the step of configuring the MOB_NBR-ADV message comprises the steps of:
when the serving BS includes the information about the heterogeneous BSs in the MOB_NBR-ADV message, determining if the heterogeneous BSs exist;
if at least one heterogeneous BS exists in a corresponding cell of the serving BS, estimating the information about the heterogeneous BSs;
setting up bits of the prescribed field, which correspond to the number of the heterogeneous BSs, according to the estimated information about the heterogeneous BSs; and
inserting access identifications (IDs) of heterogeneous BSs, to which the MSS can access, from among at least one heterogeneous BSs into the MOB_NBR-ADV message.

16. The method as claimed in claim 8, wherein the step of configuring the MOB_NBR-ADV message comprises the steps of:
when the serving BS includes the information about the heterogeneous BSs in the MOB_NBR-ADV message, determining if wireless local area network access points (WLAN APs) exist;
if at least one WLAN AP exists in a corresponding cell of the serving BS, setting a corresponding bit of the prescribed field to '0'; and
inserting IDs of corresponding WLAN APs, to which the MSS can access, from among at least one WLAN AP into the MOB_NBR-ADV message.

17. The method as claimed in claim 16, wherein the IDs of the WLAN APs accessible by the MSS are allocated to an ESS (Extended Service Set) ID field.

18. The method as claimed in claim 8, wherein the step of configuring the MOB_NBR-ADV message comprises the steps of:
when the serving BS includes the information about the heterogeneous BSs in the MOB_NBR-ADV message, determining if cellular network BSs exist;
if at least one cellular network BS exists in a corresponding cell of the serving BS, setting a corresponding bit of the prescribed field to '1'; and
inserting IDs of corresponding cellular network BSs, to which the MSS can be service-coupled, from among at least one cellular network BS into the MOB_NBR-ADV message.

19. The method as claimed in claim 18, wherein the IDs of the cellular network BSs to which the MSS can be service-coupled are allocated to a BS-ID field.

20. An apparatus for communicating through Mobile_Neighbor-Advertisement (MOB_NBR-ADV) message transmission/reception in a broadband wireless access communication system including heterogeneous communication systems, the apparatus comprising:
a serving base station (BS) for gathering information about neighbor BSs, determining if heterogeneous BSs exist from among neighbor BSs, allocating identification information that indicates if the heterogeneous BSs exist to a prescribed field according to a result of the determining step to configure the MOB_NBR-ADV message, and broadcasting the MOB_NBR-ADV message, to which the prescribed field is added; and
a mobile subscriber station (MSS) for checking an information field for the heterogeneous BSs included in the MOB_NBR-ADV message, if receiving the MOB_NBR-ADV message from the serving BS, determining if a heterogeneous BS, to which the MSS can access, exists in a cell of the BS, according to a value set in the information field for the heterogeneous BSs, and performing one of power control thereof and an access to the heterogeneous BS, based on whether the heterogeneous BS that the MSS can access exists in the cell of the BS.

21. The apparatus as claimed in claim 20, wherein when the serving BS does not include the information about the heterogeneous BSs in the MOB_NBR-ADV message, the serving BS configures the MOB_NBR-ADV message with only information about homogeneous BSs.

22. The apparatus as claimed in claim 20, wherein the serving BS configures the MOB_NBR-ADV message by allocating the prescribed field indicating if the heterogeneous BSs exist to the MOB_NBR-ADV message and adding an HET_NBR_INFO (Heterogeneous neighbor Information), to which predetermined bits indicating if the heterogeneous BSs exist are allocated, to the MOB_NBR-ADV message.

23. The apparatus as claimed in claim 20, wherein, of the predetermined bits, bits corresponding to the number of scanned heterogeneous BSs are allocated for indicating the information about the heterogeneous BSs.

24. The apparatus as claimed in claim 20, wherein the serving BS configures the MOB_NBR-ADV message by adding prescribed fields for identifying heterogeneous BSs, to which a corresponding MSS can access, among the heterogeneous BSs to the MOB_NBR-ADV message.

25. The apparatus as claimed in claim 20, wherein the serving BS allocates the identification information indicating if the heterogeneous BSs exist as a bit value representing that the heterogeneous BSs, to which the MSS can access, exist in a corresponding cell area, and a bit value representing that no accessible heterogeneous BS exists in the corresponding cell area.

26. The apparatus as claimed in claim 20, wherein if at least one heterogeneous BS exists in a corresponding cell of the serving BS, the serving BS configures the MOB_NBR-ADV message by setting up the bits of the prescribed field such that the bits corresponds to the number of the heterogeneous BSs, and inserting access IDs of heterogeneous BSs, to which the MSS can access, from among at least one heterogeneous BSs into the MOB_NBR-ADV message, and broadcasts the configured MOB_NBR-ADV message to the MSS.

27. The apparatus as claimed in claim 20, wherein if at least one wireless local area network access point (WLAN AP) exists in a corresponding cell of the serving BS, the serving BS configures the MOB_NBR-ADV message by setting a corresponding bit of the prescribed field to '0' and inserting IDs of corresponding WLAN APs, to which the MSS can access, from among at least one WLAN AP into the MOB_NBR-ADV message, and broadcasts the configured MOB_NBR-ADV message to the MSS.

28. The apparatus as claimed in claim 20, wherein the serving BS allocates the IDs of the WLAN APs accessible by the MSS to an ESS (Extended Service Set) ID field.

29. The apparatus as claimed in claim 20, wherein if at least one cellular network BS exists in a corresponding cell of the serving BS, the serving BS configures the MOB_NBR-ADV message by setting a corresponding bit of the prescribed field to '1' and inserting IDs of corresponding cellular network BSs, to which the MSS can be service-coupled, from among at least one cellular network BS into the MOB_NBR-ADV message, and broadcasts the configured MOB_NBR-ADV message to the MSS.

30. The apparatus as claimed in claim 20, wherein the serving BS allocates the IDs of the cellular network BSs, to which the MSS can be service-coupled, to a BS-ID field.

31. A method for communicating between an MSS (mobile subscriber station) and a heterogeneous network in a communication system in which a serving BS (base station) periodically broadcasting an Mobile_Neighbor-Advertisement (MOB_NBR-ADV) message coexists with different kind of heterogeneous networks, the method comprising the steps of:
if the MSS receives the MOB_NBR-ADV message from the serving BS, checking an information field for heterogeneous BSs included in the MOB_NBR-ADV message; and
performing operations corresponding to if a heterogeneous BS, to which the MSS can access, exists in a cell of the serving BS, according to a value set in the information field for the heterogeneous BSs.

32. The method as claimed in claim 31, wherein when a bit of the information field for the heterogeneous BSs is set to '1', the MSS recognizes that there is no heterogeneous BS accessible by the MSS in a cell of the serving BS, and turns off a function for connecting to the heterogeneous BS.

33. The method as claimed in claim 31, wherein when a bit of the information field for the heterogeneous BSs is set to '0', the MSS recognizes that there is a heterogeneous BS accessible by the MSS in a cell of the serving BS, and accesses the heterogeneous BS.
